# EUROPÄISCHE PATENTSCHRIFT

(11) **EP 0 930 454 B1**
(45) Veröffentlichungstag und Bekanntmachung des Hinweises auf die Patenterteilung: **20.10.2004**
(21) Anmeldenummer: 99100247.8
(22) Anmeldetag: 08.01.1999
(51) Int. Cl.: F16K 17/38

(54) **Thermisch auslösbare Absperreinrichtung**
Thermally releasable shut-off device
Dispositif d'arrêt à déclenchement thermique

(30) Priorität: 20.01.1998 DE 19801945; 20.03.1998 DE 19812282
(43) Veröffentlichungstag der Anmeldung: 21.07.1999
(73) Patentinhaber: ELSTER GmbH, 55252 Mainz-Kastel (DE)
(72) Erfinder: Keidl, Manfred, 65399 Kiedrich (DE); Ladage, Paul, 65343 Eltville (DE)
(74) Vertreter: Harlacher, Mechthild, Dipl.-Ing.

(56) Entgegenhaltungen:
- EP-A- 0 131 782
- WO-A-90/08912
- DE-A- 3 436 582
- DE-U- 29 709 965
- FR-A- 2 234 501
- FR-A- 2 304 013
- GB-A- 2 211 277

## Beschreibung

Die Erfindung betrifft eine thermisch auslösbare Absperreinrichtung, insbesondere für Gasleitungen, Gasarmaturen oder dergleichen mit einem Gehäuse, das einen Durchgang aufweist, einen im Durchgang gebildeten Sitz, einem im Durchgang angeordneten Halteelement, einem Verschlusselement, das mit der Halteeinrichtung verbunden ist, einer Feder, die das Verschlusselement in Richtung auf den Ventilsitz vorspannt und einem thermisch erweichbaren Auslöseelement, das bei Erwärmung die Verbindung zwischen dem Halteelement und dem Verschlusselement löst, wobei das Auslöseelement als Träger des Verschlusselements ausgebildet ist und formschlüssig mit dem Halteelement versiegelt ist.

Derartige Absperreinrichtungen werden insbesondere in Gasleitungen vor Gas-Druckregelgeräten eingebaut. Bei einem Brand soll die Absperreinrichtung bei unzulässig hohen Temperaturen, d. h. Temperaturen von ca. 180 °C den Gasdurchfluss unterbrechen. Damit soll gewährleistet werden, dass beispielsweise bei Mitteldruckregelgeräten (0,1 - 4 bar) weniger als 150 dm³/h Gas austritt.

Aus der Praxis sind eine Vielzahl von unterschiedlich aufgebauten thermisch auslösbaren Absperreinrichtungen bekannt. Bei einer bekannten Ausführungsform ist ein Ventilteller auf einer Führungshülse mittels Weichlot befestigt. Der Ventilteller ist unter der Einwirkung einer Feder gegen einen ringförmigen Ventilsitz pressbar. Die Führungshülse ist auf einem Führungsstift verschiebbar angeordnet. Bei einem Brand schmilzt das Weichlot, so dass die Feder den Ventilteller gegen den Ventilsitz presst.

Die Konstruktion ist herstellungstechnisch aufwendig und mit relativ hohen Kosten verbunden. Außerdem ist die Montage schwierig.

Eine Absperreinrichtung der eingangs genannten Art ist aus der DE-U1-297 09 965 bekannt. Das Verschlusselement weist einen kegeistumpfförmigen Bereich auf, an den sich beidseitig hyperboidförmige Bereiche anschließen.

Die Herstellung des Verschlusselements ist aufwendig, da zur Erzielung einer definierten Dichtheit das Verschlusselement und der zugehörige Sitz in Bezug auf die Formgebung genau aufeinander abgestimmt werden müssen. Das Verschlusselement ist mit einem zapfenartigen Ansatz versehen, der in einer Bohrung geführt wird. Bei der Schließbewegung können selbst kleinste Toleranzabweichungen bei der Führung zu einem relativ großen Winkelversatz beim Auftreffen des Verschlusselements auf dem Sitz führen. Die Fertigung und die Montage sind aufwendig, wenn stets eine definierte Dichtheit bzw. eine bestimmte geringe Leckrate garantiert werden soll.

Aufgabe der Erfindung ist es demgemäss, eine Absperreinrichtung der eingangs genannten Art zu schaffen, die einfach und kostengünstig aufgebaut ist und die eine einfache Montage ermöglicht.

Zur Lösung dieser Aufgabe ist die thermisch auslösbare Absperreinrichtung nach der Erfindung dadurch gekennzeichnet, dass das Verschlusselement als Kugelkalotte mit einem zylindrischen Fortsatz ausgebildet ist und dass das Verschlusselement mittels eines gasdurchlässigen zylinderförmigen Führungselementes im Gehäuse geführt wird.

Die Erfindung stellt eine einfache und kostengünstige Konstruktion dar und ermöglicht eine einfache Montage.

Dadurch, dass das Verschlusselement als Kugelkalotte mit einem zylindrischen Fortsatz ausgebildet ist, wird die Herstellung als Stanz- oder Tiefziehteil ermöglicht. Je nach Temperaturanforderung können verschiedene Materialien eingesetzt werden. Die Herstellung ist relativ kostengünstig im Vergleich zu der Herstellung von Verschlusselementen, die als Kugeln oder Kugelabschnitte durch Zerspannung hergestellt werden.

Das Verschlusselement wird mittels eines gasdurchlässigen zylinderförmigen Führungselementes im Gehäuse geführt wird. Das Führungselement kann als Sieb ausgebildet sein, das außerdem Verschmutzungen auffängt. Das Führungselement besteht aus Metall, vorzugsweise aus Edelstahl.

Nach einem weiteren Merkmal der Erfindung besteht das Auslöseelement wenigstens teilweise aus einem thermoplastischen Kunststoff, dessen Schmelzpunkt der vorgegebenen Temperatur entspricht. Durch Wahl des Kunststoffes kann die Temperatur vorgegeben werden, bei der die Absperreinrichtung ausgelöst wird. Die Auslösetemperatur kann daher in einem großen Temperaturbereich ausgewählt werden, um den unterschiedlichen Anwendungsfällen gerecht zu werden.

Vorzugsweise ist das Auslöseelement mittels mehrerer Schnapphaken, die über den Umfang verteilt sind, mit dem Halteelement verriegelt. Die Auslösung erfolgt durch das Erweichen der Schnapphaken.

Nach einem weiteren vorteilhaften Merkmal ist das Halteelement lösbar im Gehäuse befestigt. Da das Auslöseelement, das als Träger des Verschlusselementes dient, mit dem Halteelement verbunden ist, können diese Bestandteile der Absperreinrichtung einfach montiert und auch demontiert werden.

Vorzugsweise greift die Feder einerseits am Halteelement und andererseits am Auslöseelement an. Das Auslöseelement kann eine Ausnehmung zur Aufnahme der Feder aufweisen.

Vorzugsweise wird das Verschlusselement mittels einer Pressverbindung auf dem Halteelement befestigt.

Vorzugsweise ist das Führungselement mit dem Halteelement befestigt und im Gehäuse geführt.

Halteelement, Auslöseelement, Verschlusselement und das Führungselement können als vormontierbare Einheit ausgebildet sein.

Das Gehäuse kann als Teil einer Armatur ausgebildet sein. Alternativ dazu kann das Gehäuse als Einsatz ausgebildet sein und mindestens an einem Ende ein Außengewinde aufweisen.

Die Erfindung wird im Folgenden anhand eines bevorzugten Ausführungsbeispiels einer erfindungsgemäßen Absperreinrichtung in Zusammenhang mit der beiliegenden Zeichnung näher erläutert.

Die Zeichnung zeigt in
- Fig. 1 einen Längsschnitt durch eine thermisch auslösbare Absperreinrichtung in der nicht ausgelösten betriebsbereiten Schaltposition;
- Fig. 2 einen Schnitt durch eine Absperreinrichtung in der ausgelösten Schaltposition;
- Fig. 3 einen Schnitt durch ein Anschlussstück eines Gasdruckreglers mit eingebauter Absperreinrichtung.

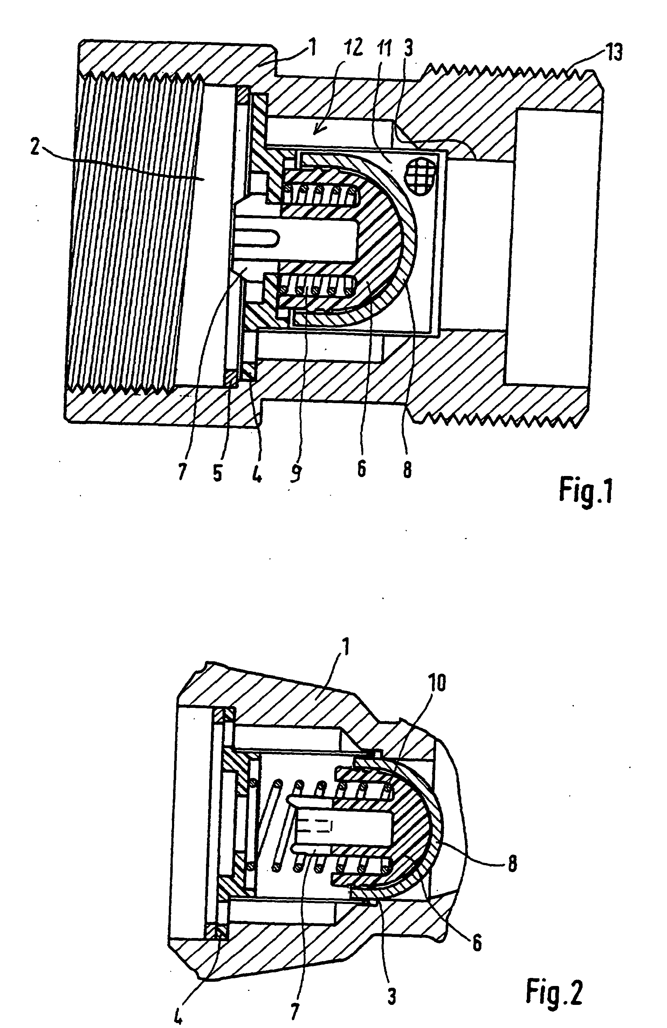

Die Hauptanwendung der erfindungsgemäßen Absperreinrichtung ist die Anwendung vor Gasdruckreglem im haushaltlichen Bereich. Die thermisch auslösbare Absperreinrichtung wird auf der Eingangsseite des Gasdruckregler-Gehäuses eingebaut. Die thermisch auslösbare Absperreinrichtung nach den Fig. 1 bis 3 umfasst ein Gehäuse 1, das einen Durchgang 2 für das Gas bildet. Im Durchgang 2 ist ein kegelig gearbeiteter Sitz 3 ausgebildet. Die Neigung beträgt ca. 1 °.

Ein Halteelement 4 ist mittels eines Sprengringes 5 im Gehäuse lösbar befestigt. Das Halteelement ist als gasdurchlässiges Kunststoffteil ausgebildet. Mit dem Halteelement 4 ist formschlüssig ein Auslöseelement 6 verriegelt, und zwar mittels mehrerer Schnapphaken 7, die über den Umfang verteilt sind.

Das Auslöseelement 6 ist gleichzeitig als Träger eines Verschlusselementes 8 ausgebildet. Es ist außenseitig an die Form des Verschlusselementes angepasst, das auf das Auslöseelement aufgesteckt ist. Das Verschlusselement 8 ist als Stanz- oder Tiefziehteil aus Blech hergestellt und ist in dem Bereich, der mit dem Sitz dichtend zusammenwirkt, als Kugelkalotte ausgebildet. Die optimale Führung wird durch einen zylindrischen Fortsatz gewährleistet. Das Auslöseelement enthält eine Ausnehmung 9 zur Aufnahme einer Feder 10. Die Feder 10 greift einerseits an dem Halteelement 4 und andererseits am Auslöseelement 6 an.

Das Auslöseelement besteht wenigstens teilweise aus einem thermoplastischen Kunststoff, dessen Schmelzpunkt der Temperatur entspricht, bei dem die Verbindung zwischen dem Halteelement 4 und dem Verschlusselement 8 gelöst werden soll. Im vorliegenden Fall wird die Verbindung zwischen Halteelement und Auslöseelement 6 bei ca. 180 °C gelöst.

Als Material für das Auslöseelement kann ein beliebiges geeignetes gasbeständiges Material verwendet werden. Das Material muss jedoch bis zur Auslösetemperatur formbeständig sein, da auf das Auslöseelement ständig Kräfte einwirken.

Das Verschlusselement ist konzentrisch von einem gasdurchlässigen, zylinderförmigen Führungselement 11 umgeben. Das Führungselement ist auf dem Halteelement 4 befestigt und wird im Gehäuse geführt.

In Fig. 2 ist die Absperreinrichtung in der ausgelösten Schaltposition dargestellt. Wenn sich die Umgebungstemperatur erhöht, wird die Wärme über das Halteelement 4 an das Auslöseelement 6 weitergeleitet.

Bei einer Temperatur von ca. 180 °C weichen die Schnapphaken 7 auf und die vorgespannte Feder 10 drückt das Verschlusselement 8 in Richtung auf den Sitz 3. Der Gasfluss wird gesperrt. Der anstehende Eingangsdruck führt zusätzlich zu einem Verpressen des Verschlusselementes 8 auf den Sitz 3.

Durch Entfernen des Sprengringes 5 kann eine komplett vormontierte Einheit 12, bestehend aus Halteelement 4, Auslöseelement 6, Verschlusselement 8 und Führungselement 11 entnommen und falls erforderlich, ausgetauscht werden.

Das in Fig. 1 dargestellte Gehäuse weist ein Außengewinde 13 auf. Es kann in eine Gasarmatur oder eine Gasleitung eingeschraubt werden.

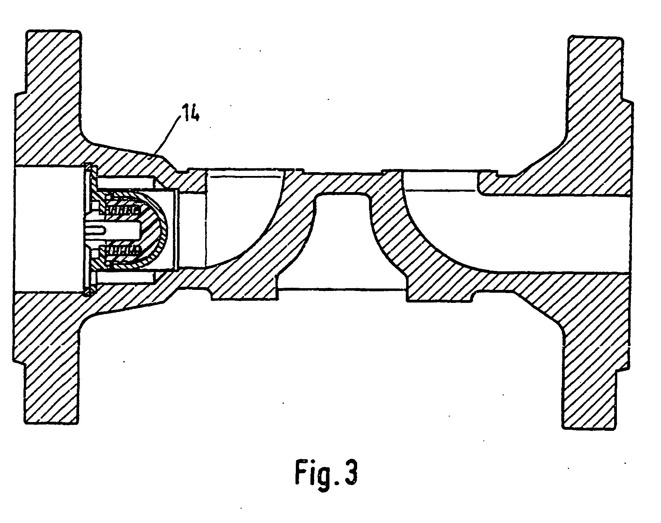

In Fig. 3 ist das Gehäuse als Teilstück einer Armatur 14, und zwar einem Anschlussstück für einen Gasdruckregler ausgebildet. Aus Gründen des Brandschutzes handelt es sich um ein Gusteil.

Die komplette Absperreinrichtung ist einfach aufgebaut und kostengünstig herstellbar. Versuche und Zulassungsuntersuchungen haben bestätigt, dass die Absperreinrichtung zuverlässig funktioniert.

## Patentansprüche

1. Thermisch auslösbare Absperreinrichtung, insbesondere für Gasleitungen, Gasarmaturen oder dergleichen mit
- einem Gehäuse (1), das einen Durchgang (2) aufweist,
- einem im Durchgang (2) gebildeten Sitz (3),
- einem Verschlusselement (8), das mit dem Halteelement (4) verbunden ist,
- einer Feder (10), die das Verschlusselement (8) in Richtung auf den Sitz (4) verspannt und
- einem thermisch erweichbaren Auslöseelement (6), das bei Erwärmung auf eine vorgegebene Temperatur die Verbindung zwischen dem Halteelement (4) und dem Verschlusselement (8) löst, wobei das Auslöseelement (6) als Träger des Verschlusselements (8) ausgebildet ist und formschlüssig mit dem Halteelement (4) verriegelt ist,
**dadurch gekennzeichnet,**
**dass** das Verschlusselement (8) als Kugelkalotte mit einem zylindrischen Fortsatz ausgebildet ist und
**dass** das Verschlusselement (8) mittels eines gasdurchlässigen zylinderförmigen Führungselementes (11) im Gehäuse (1) geführt wird.

2. Absperreinrichtung nach Anspruch 1,
**dadurch gekennzeichnet,**
**dass** das Auslöseelement (6) wenigstens teilweise aus einem thermoplastischen Kunststoff besteht, dessen Schmelzpunkt der vorgegebenen Temperatur entspricht.

3. Absperreinrichtung nach einem der Ansprüche 1 bis 2,
**dadurch gekennzeichnet,**
**dass** das Auslöseelement (6) mittels mehrerer Schnapphaken (7), die über den Umfang verteilt sind, mit dem Halteelement (4) verriegelt ist.

4. Thermisch auslösbare Absperreinrichtung nach Anspruch 1 oder 3,
**dadurch gekennzeichnet,**
**dass** das Halteelement lösbar im Gehäuse (1) befestigt ist.

5. Absperreinrichtung nach einem der Ansprüche 1 bis 4,
**dadurch gekennzeichnet,**
**dass** die Feder (10) einerseits am Halteelement (4) und andererseits am Auslöseelement (6) angreift.

6. Absperreinrichtung nach Anspruch 5,
**dadurch gekennzeichnet,**
**dass** das Auslöseelement (6) eine Ausnehmung (9) zur Aufnahme der Feder (10) aufweist.

7. Absperreinrichtung nach einem der Ansprüche 1 bis 6,
**dadurch gekennzeichnet,**
**dass** das Verschlusselement (8) als Stanz- oder Tiefziehteil aus Blech ausgebildet ist.

8. Absperreinrichtung nach Anspruch 7,
**dadurch gekennzeichnet,**
**dass** das Verschlusselement (8) auf das Halteelement (4) aufgesteckt ist.

9. Absperreinrichtung nach einem der Ansprüche 1 bis 8,
**dadurch gekennzeichnet,**
**dass** das Führungselement (11) mit dem Halteelement (4) befestigt und im Gehäuse (1) geführt wird.

10. Absperreinrichtung nach einem der Ansprüche 1 bis 9,
**dadurch gekennzeichnet,**
**dass** das Halteelement (4), das Auslöseelement (6), das Verschlusselement (8) und das Führungselement (11) als vormontierbare Einheit (12) ausgebildet sind.

11. Absperreinrichtung nach einem der Ansprüche 1 bis 10,
**dadurch gekennzeichnet,**
**dass** das Gehäuse als Teilstück einer Armatur (14) ausgebildet ist.

12. Absperreinrichtung nach einem der Ansprüche 1 bis 11,
**dadurch gekennzeichnet,**
**dass** das Gehäuse (1) als Einsatz ausgebildet ist und an wenigstens einem Ende ein Außengewinde (13) aufweist.

## Claims

1. Thermally releasable shut-off device, in particular for gas pipelines, gas valves or similar with
- a housing (1), which exhibits a passage (2),
- a seat (3) formed in the passage (2),
- a sealing element (8) which is connected to the retaining element (4),
- a spring (10) which pre-tensions the sealing element (8) against the seat (3) and
- a thermally softenable release element (6), which releases the connection between the retaining element (4) and the sealing element (8) when heated to a preset temperature, the release element (6) being designed as the support of the sealing element (8) and being locked tight with the retaining element (4)
**characterised in that**
the sealing element (8) is designed as a universal ball joint with a cylindrical extension and that the sealing element (8) is carried in the housing (1) by means of a gas-permeable cylindrically shaped guide element (11).

2. Shut-off device according to claim 1,
**characterised in that**
the release element (6) consists at least partly of a thermoplastic whose melting point corresponds to the preset temperature.

3. Shut-off device according to either of claims 1 or 2,
**characterised in that**
the release element (6) is locked with the retaining element (4) by means of several snap-in hooks (7) which are spaced over the circumference.

4. Thermally releasable shut-off device according to claim 1 or 3,
**characterised in that**
the retaining element is detachably fixed in the housing (1).

5. Shut-off device according to any one of claims 1 through 4,
**characterised in that**
the spring (10) acts on the retaining element (4) as well as on the release element (6).

6. Shut-off device according to claim 5,
**characterised in that**
the release element (6) exhibits a recess (9) to accommodate the spring (10).

7. Shut-off device according to any one of claims 1 through 6,
**characterised in that**
the sealing element (8) is designed as a stamping or deep-drawn part made of metal plate.

8. Shut-off device according to claim 7,
**characterised in that**
the sealing element (8) is mounted on the retaining element (4).

9. Shut-off device according to any one of claims 1 through 8,
**characterised in that**
the guide element (11) is attached to the retaining element (4) and carried in the housing (1).

10. Shut-off device according to any one of claims 1 through 9,
**characterised in that**
the retaining element (4), the release element (6), the sealing element (8) and the guide element (11) are designed as a unit which can be pre-assembled (12).

11. Shut-off device according to any one of claims 1 through 10,
**characterised in that**
the housing is designed as part of a valve (14).

12. Shut-off device according to any one of claims 1 through 11,
**characterised in that**
the housing (1) is designed as an insert and exhibits a male thread (13), at least at one end.

## Revendications

1. Dispositif d'arrêt à déclenchement thermique, en particulier pour des conduites de gaz, des robinets de gaz et similaires avec
- une enveloppe (1) présentant un passage (2),
- une siège (3) formée dans le passage (2),
- un élément de verrouillage (8) qui est lié à l'élément de maintien (4),
- un ressort (10) haubanant l'élément de verrouillage (8) en direction de la siège (3), et
- un élément à déclenchement (6) thermiquement amollisable qui, en cas de réchauffement à une température préfixée, desserre la liaison entre à l'élément de maintien (4) et l'élément de verrouillage (8), l'élément de déclenchement (6) étant conçu comme support de l'élément de verrouillage (8) et verrouillé à fermeture géométrique avec l'élément de maintien (4),
**caractérisé par le fait,**
**que** l'élément de verrouillage (8) est conçu sous forme de calotte sphérique avec un prolongement cylindrique et
**que** l'élément de verrouillage (8) est guidé dans l'enveloppe (1) moyennant un élément de guidage (11) sous forme de cylindre perméable au gaz.

2. Dispositif d'arrêt suivant la revendication 1,
**caractérisé par le fait,**
**que** l'élément de déclenchement (6) consiste au moins en partie en une matière thermoplastique dont le point de fusion correspond à la température préfixée.

3. Dispositif d'arrêt suivant l'une des revendications 1 ou 2,
**caractérisé par le fait,**
**que** l'élément de déclenchement (6) est verrouillé avec l'élément de maintien (4) à l'aide de plusieurs crochets à déclic (7) répartis sur la circonférence.

4. Dispositif d'arrêt à déclenchement thermique suivant l'une des revendications 1 ou 3,
**caractérisé par le fait,**
**que** l'élément de maintien est fixé dans l'enveloppe (1) de manière détachable.

5. Dispositif d'arrêt suivant l'une des revendications 1 à 4,
**caractérisé par le fait,**
**que** le ressort (10) saisit d'une part à l'élément de maintien (4) et d'autre part à l'élément de déclenchement (6).

6. Dispositif d'arrêt suivant la revendication 5,
**caractérisé par le fait,**
**que** l'élément de déclenchement (6) présente un creux (9) pour recevoir le ressort (10).

7. Dispositif d'arrêt suivant l'une des revendications 1 à 6,
**caractérisé par le fait,**
**que** l'élément de verrouillage (8) est formé en tôle sous forme de pièce estampée ou à emboutissage profond.

8. Dispositif d'arrêt suivant la revendication 7,
**caractérisé par le fait,**
**que** l'élément de verrouillage (8) est enfilé sur l'élément de maintien (4).

9. Dispositif d'arrêt suivant l'une des revendications 1 à 8,
**caractérisé par le fait,**
**que** l'élément de guidage (11) est fixé avec l'élément de maintien (4) et guidé dans l'enveloppe (1).

10. Dispositif d'arrêt suivant l'une des revendications 1 à 9,
**caractérisé par le fait,**
**que** l'élément de maintien (4), l'élément de déclenchement (6), l'élément de verrouillage (8) et l'élément de guidage (11) sont conçus sous forme d'une unité pouvant être pré-montée (12).

11. Dispositif d'arrêt suivant l'une des revendications 1 à 10,
**caractérisé par le fait,**
**que** l'enveloppe est conçue sous forme d'une partie d'un robinet (14).

12. Dispositif d'arrêt suivant l'une des revendications 1 à 11,
**caractérisé par le fait,**
**que** l'enveloppe (1) est conçue sous forme de garniture présentant au moins à une extrémité un filet extérieur (13).
